# FASCICULE DE BREVET EUROPEEN

(11) **EP 1 789 320 B1**
(45) Date de publication et mention de la délivrance du brevet: **11.06.2008**
(21) Numéro de dépôt: 05857325.4
(22) Date de dépôt: 03.08.2005
(51) Int. Cl.: B64D 27/26

(54) **MAT D'ACCROCHAGE DE TURBOREACTEUR POUR AERONEF**
STRAHLTRIEBWERKPYLON FÜR EIN FLUGZEUG
TURBOJET PYLON FOR AIRCRAFT

(30) Priorité: 05.08.2004 FR 0451791
(43) Date de publication de la demande: 30.05.2007
(73) Titulaire: AIRBUS France, 31060 Toulouse (FR)
(72) Inventeur: DIOCHON, Lionel, F-31000 Toulouse (FR); DURAND, Jérôme, F-31490 Leguevin (FR)
(74) Mandataire: Poulin, Gérard
(86) Numéro de dépôt international: PCT/FR2005/050645
(87) Numéro de publication internationale: WO 2006/090032

(56) Documents cités:
- US-A- 3 666 211
- US-A- 3 848 832
- US-A- 4 266 741

## Description

### DOMAINE TECHNIQUE

La présente invention se rapporte de façon générale à un mât d'accrochage de turboréacteur pour aéronef. Ce type de mât d'accrochage, également appelé « EMS » (de l'anglais « Engine Mounting Structure »), permet de suspendre le turboréacteur au-dessous de la voilure de l'aéronef, ou bien de monter ce turboréacteur au-dessus de cette même voilure.

### ÉTAT DE LA TECHNIQUE ANTÉRIEURE

Un tel mât d'accrochage est en effet prévu pour constituer l'interface de liaison entre un turboréacteur et une voilure de l'aéronef. Il permet de transmettre à la structure de cet aéronef les efforts générés par son turboréacteur associé, et autorise également le cheminement du carburant, des systèmes électriques, hydrauliques, et air entre le moteur et l'aéronef.

Afin d'assurer la transmission des efforts, le mât comporte une structure rigide, souvent du type « caisson », c'est-à-dire formée par l'assemblage de longerons supérieurs et inférieurs et de panneaux latéraux raccordés entre eux par l'intermédiaire de nervures transversales.

D'autre part, le mât est muni d'un système de montage interposé entre le turboréacteur et la structure rigide du mât, ce système comportant globalement au moins deux attaches moteur, généralement au moins une attache avant et au moins une attache arrière.

De plus, le système de montage comprend un dispositif de reprise des efforts de poussée générés par le turboréacteur. Dans l'art antérieur, ce dispositif prend par exemple la forme de deux bielles latérales raccordées d'une part à une partie arrière du carter de soufflante du turboréacteur, et d'autre part à une attache arrière fixée sur le carter central de ce dernier.

De la même façon, le mât d'accrochage comporte également un second système de montage interposé entre la structure rigide de ce mât et la voilure de l'aéronef, ce second système étant habituellement composé de deux ou trois attaches.

Enfin, le mât est pourvu d'une structure secondaire assurant la ségrégation et le maintien des systèmes tout en supportant des carénages aérodynamiques.

Comme cela a été évoqué ci-dessus, un mât d'accrochage classique de l'art antérieur prend grossièrement la forme d'un caisson parallélépipédique, disposant de grandes dimensions afin de pouvoir reprendre la totalité des efforts générés par le turboréacteur associé.

De plus, les solutions proposées antérieurement prévoyant toutes qu'au moins une attache arrière soit fixée sur le carter central du turboréacteur, le mât d'accrochage est donc destiné à être positionné à proximité de ce dernier, dans le but évident de pouvoir assurer convenablement l'assemblage de l'attache arrière.

Ainsi, dans ce cas précis où le mât d'accrochage en forme de caisson de grandes dimensions est agencé à proximité du carter central du turboréacteur, ce mât provoque alors inéluctablement des perturbations importantes du flux secondaire s'échappant du canal annulaire de soufflante, ce qui se traduit directement par des pertes en termes de traînée, de rendement du turboréacteur, et de consommation de carburant. De plus, ces perturbations sont naturellement accentuées par la présence des bielles de reprise de poussée agencées en sortie du canal annulaire de soufflante.

L'arrière-plan technologique est illustré par le document US-A- 3 848 832.

### EXPOSÉ DE L'INVENTION

L'invention a donc pour but de proposer un mât d'accrochage de turboréacteur pour aéronef remédiant au moins partiellement aux inconvénients mentionnés ci-dessus relatifs aux réalisations de l'art antérieur, et également de présenter un aéronef disposant d'au moins un tel mât.

Pour ce faire, l'invention a pour objet un mât d'accrochage de turboréacteur pour aéronef, disposant d'une structure rigide comprenant une pluralité d'arceaux agencés de façon à délimiter conjointement une partie d'une surface fictive sensiblement cylindrique de section circulaire, la pluralité d'arceaux comportant au moins un arceau en forme de portion annulaire sensiblement centré sur un axe longitudinal de la surface fictive. Selon l'invention, la structure rigide du mât d'accrochage comporte un caisson central, également appelé caisson central de torsion, qui s'étend parallèlement à l'axe longitudinal de la surface fictive, et qui est solidaire de chaque arceau en forme de portion annulaire. De plus, la pluralité d'arceaux comporte aussi deux arceaux latéraux de reprise des efforts de poussée disposés respectivement de part et d'autre du caisson central, chacun des deux arceaux latéraux étant solidarisé d'une part à chaque arceau en forme de portion annulaire, et d'autre part au caisson central.

Ainsi, chacun des arceaux de la pluralité d'arceaux dispose donc d'une courbure lui permettant de s'étendre autour de cette surface fictive sensiblement cylindrique de section circulaire. Ils forment par conséquent conjointement un ensemble de la structure rigide qui est avantageusement capable de n'être que très peu contraignant en termes de perturbation du flux secondaire s'échappant du canal annulaire de soufflante du turboréacteur lui étant associé, comparativement aux solutions classiques de l'art antérieur dans lesquelles le mât d'accrochage prenait la forme d'un caisson central parallélépipédique de grandes dimensions, disposé de façon très rapprochée du carter central du turboréacteur.

Effectivement, il est possible de prévoir qu'un diamètre de la surface fictive est sensiblement identique à un diamètre d'une surface cylindrique externe du carter de soufflante du turboréacteur associé, impliquant que l'ensemble rigide formé par la pluralité d'arceaux se situe alors sensiblement dans le prolongement de cette surface externe du carter de soufflante, et plus généralement dans le prolongement d'une partie annulaire périphérique de ce carter. Naturellement, dans ce cas précis où la pluralité d'arceaux est assimilable à une portion d'une enveloppe sensiblement cylindrique de section circulaire et de diamètre proche de celui du carter de soufflante, les perturbations du flux secondaire susceptibles d'être provoquées par cette pluralité d'arceaux sont extrêmement faibles, voire quasiment inexistantes.

Cela permet alors avantageusement d'obtenir des gains en traînée, en rendement du turboréacteur, ainsi qu'en consommation de carburant.

A titre indicatif, il est noté que si la pluralité d'arceaux est assimilable de façon générale à une portion d'une enveloppe sensiblement cylindrique de section circulaire, elle prend de préférence la forme d'une portion d'une enveloppe sensiblement cylindrique de section semi-circulaire, la notion de « portion » étant bien entendu présente en raison des espaces vides situés entre les différents arceaux. Naturellement, cette forme préférée est tout à fait adaptée pour assurer un montage aisé du turboréacteur sur la structure rigide du mât d'accrochage.

Comme indiqué précédemment, la pluralité d'arceaux comporte au moins un arceau en forme de portion annulaire sensiblement centré sur un axe longitudinal de la surface fictive, cet axe longitudinal étant parallèle à la direction longitudinale du mât, et préférentiellement destiné à être confondu avec l'axe longitudinal du turboréacteur. A titre d'exemple illustratif, c'est sur un tel arceau en forme de portion annulaire que peuvent être fixées la totalité des attaches moteur susmentionnées.

Par ailleurs, la résistance mécanique apportée par les arceaux permet au caisson central de disposer de dimensions plus faibles que celles pratiquées antérieurement, principalement en ce qui concerne son épaisseur. Cela implique que ce caisson central est également en mesure de ne provoquer que de très faibles perturbations du flux secondaire s'échappant du canal annulaire de soufflante. Par ailleurs, il est aussi à observer que la faible épaisseur du caisson central est autorisée en raison du fait qu'il n'est plus prévu d'interposer une attache moteur arrière entre ce même caisson et le carter central du turboréacteur, et qu'il n'est par conséquent plus nécessaire d'approcher le caisson le plus près possible de ce carter, comme cela était le cas antérieurement.

Enfin, il est indiqué que la reprise des efforts de poussée générés par le turboréacteur est alors avantageusement réalisée avec des éléments faisant partie intégrante de la structure rigide du mât d'accrochage. Ainsi, il n'est donc plus nécessaire de prévoir de dispositif additionnel de reprise des efforts de poussée du type bielles latérales, comme cela était le cas dans les solutions connues de l'art antérieur.

A ce titre, toujours dans le but de reprendre ces efforts de poussée, on peut prévoir que la pluralité d'arceaux comporte en outre deux arceaux latéraux secondaires de reprise des efforts de poussée disposés respectivement de part et d'autre du caisson central, chacun de ces deux arceaux latéraux secondaires étant solidarisé d'une part à au moins un arceau en forme de portion annulaire, et d'autre part au caisson central.

Par ailleurs, la pluralité d'arceaux peut aussi comporter deux arceaux de maintien des arceaux latéraux de reprise des efforts de poussée, ces deux arceaux de maintien étant disposés respectivement de part et d'autre du caisson central et chacun solidarisé d'une part à l'un dés deux arceaux latéraux, et d'autre part au caisson central. De manière avantageuse, les arceaux de maintien sont disposés de façon à travailler en traction, et permettent d'éviter le fléchissement des arceaux latéraux de reprise des efforts de poussée.

De préférence, le mât d'accrochage comporte une pluralité d'attaches moteur, chacune d'entre elles étant fixée à la pluralité d'arceau. Ainsi, il est à comprendre que ces attaches moteur du mât d'accrochage sont toutes destinées à être fixées au carter de soufflante du turboréacteur coopérant avec ce même mât.

Dans un tel cas, la reprise des efforts générés par le turboréacteur s'effectue exclusivement sur le carter de soufflante à l'aide des toutes les attaches moteur, et permet par conséquent au carter central de ce turboréacteur de ne plus être relié directement au mât d'accrochage par une ou des attaches arrière, comme cela était le cas dans les réalisations de l'art antérieur.

Ainsi, cette disposition particulière des attaches moteur sur la structure rigide du mât est capable d'induire une diminution considérable de la flexion rencontrée au niveau du carter central, que cette flexion soit due aux efforts de poussée générés par le turboréacteur, ou bien due aux rafales susceptibles d'être rencontrées durant les diverses phases de vol de l'aéronef.

Par conséquent, la diminution de flexion susvisée engendre une baisse significative des frottements entre les pales tournantes de compresseur et de turbine et le carter central du moteur, et limite donc grandement les pertes de rendement dues à l'usure de ces pales.

En outre, le fait de prévoir les attaches moteur sur la pluralité d'arceaux offre la possibilité de les écarter fortement les unes des autres, l'écartement pratiqué pouvant par exemple être approximativement égal au diamètre de la surface fictive, qui est largement supérieur à une largeur du caisson central. Cet écartement important a pour avantage de pouvoir simplifier considérablement la conception de ces attaches moteur, en raison du fait que les efforts qu'elles doivent reprendre, associés à un moment selon un axe donné, sont naturellement affaiblis par rapport à ceux rencontrés dans les solutions classiques de l'art antérieur dans lesquelles les attaches moteur destinées à être fixées sur le carter central ne pouvaient pas être aussi éloignées les unes des autres.

Il est par ailleurs indiqué que les attaches moteur et la structure rigide du mât d'accrochage peuvent avantageusement être situés à distance de la partie chaude du turboréacteur associé, ce qui implique une diminution significative des effets thermiques susceptibles de s'appliquer sur ces éléments.

De préférence, la pluralité d'attaches moteur est constituée d'une première attache moteur et d'une seconde attache moteur situées de façon symétrique par rapport à un plan défini par l'axe longitudinal de la surface fictive et une direction verticale du mât, ainsi que d'une troisième attache moteur traversée par ce même plan.

Dans cette configuration, on peut alors prévoir que les première, seconde et troisième attaches moteur sont fixées sur un même arceau en forme de portion annulaire appartenant à la pluralité d'arceaux, ce qui leur permet d'occuper des positions dans lesquelles elles sont avantageusement très éloignées les unes des autres. En étant situées sur un même arceau en forme de portion annulaire, les attaches moteur peuvent ainsi facilement être fixées à la partie annulaire périphérique du carter de soufflante.

Préférentiellement, les première et seconde attaches moteur sont traversées par un plan défini par l'axe longitudinal de la surface fictive et une direction transversale du mât d'accrochage.

Toujours de manière préférentielle, les première et seconde attaches moteur sont chacune conçues de manière à reprendre des efforts s'exerçant selon une direction longitudinale du mât et selon la direction verticale de celui-ci, et la troisième attache moteur est conçue de manière à reprendre des efforts s'exerçant selon cette même direction longitudinale du mât, et selon une direction transversale de celui-ci.

L'invention a également pour objet un aéronef comprenant au moins un mât d'accrochage tel que celui qui vient d'être présenté.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue de côté d'un ensemble moteur pour aéronef, comprenant un mât d'accrochage selon un mode de réalisation préféré de la présente invention ;
- la figure 2 représente une vue schématique en perspective de l'ensemble représenté sur la figure 1, la structure rigide du mât d'accrochage ayant été retirée pour laisser plus clairement apparaître les attaches moteur de ce même mât ;
- la figure 3 représente une vue partielle et agrandie en perspective du mât d'accrochage selon le mode de réalisation préféré ;
- les figures 4a et 4b représentent respectivement des vues en coupe prises selon des plans transversaux P1 et P2 de la figure 3 ;
- la figure 4c représente une vue en perspective destinée à expliquer la forme de la pluralité d'arceaux prévue pour constituer partiellement le mât d'accrochage de la figure 3 ;
- la figure 5 représente une vue similaire à celle montrée sur la figure 3, à laquelle il a été rajouté une représentation schématique des attaches moteur du mât d'accrochage ;
- la figure 6 représente une vue similaire à celle montrée sur la figure 3, sur laquelle le mât d'accrochage se présente sous la forme d'une première alternative au mode de réalisation préféré ;
- la figure 7 représente une vue similaire à celle montrée sur la figure 3, sur laquelle le mât d'accrochage se présente sous la forme d'une seconde alternative au mode de réalisation préféré ; et
- les figures 8a à 8c représentent des vues de côté illustrant différentes étapes successives de l'opération d'assemblage du turboréacteur sur le mât d'accrochage représenté sur la figure 7.

### EXPOSÉ DÉTAILLÉ DE MODES DE RÉALISATION PARTICULIERS

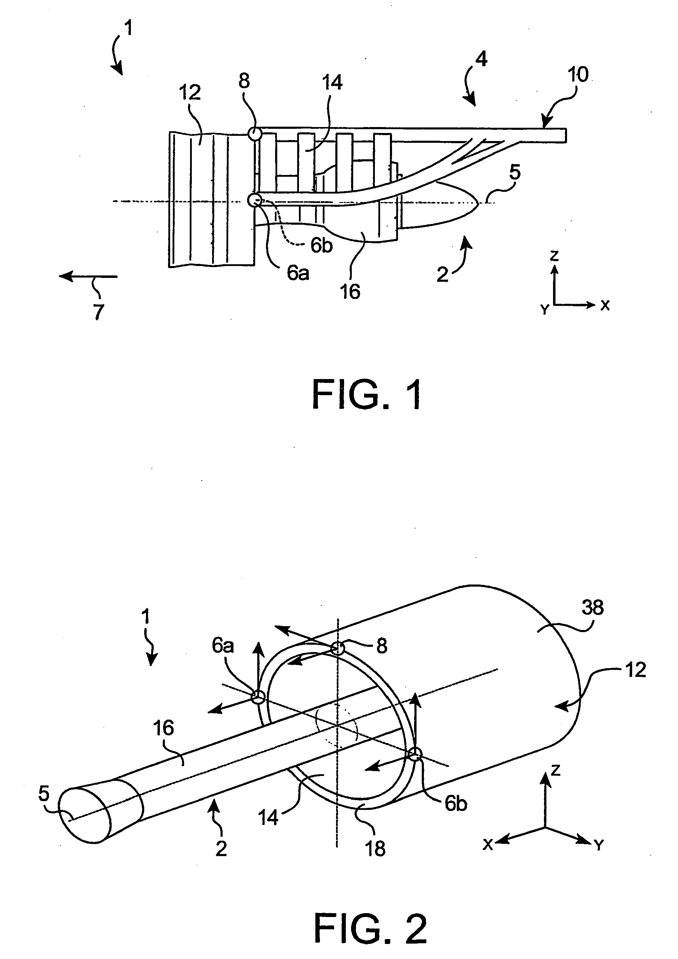

En référence à la figure 1, on voit un ensemble moteur 1 pour aéronef destiné à être fixé sous une aile de cet aéronef (non représenté), cet ensemble 1 comportant un mât d'accrochage 4 selon un mode de réalisation préféré de la présente invention.

Globalement, l'ensemble moteur 1 est composé d'un turboréacteur 2 et du mât d'accrochage 4, ce dernier étant muni notamment d'une pluralité d'attaches moteur 6a, 6b, 8, et d'une structure rigide 10 portant ces mêmes attaches (l'attache 6b étant masquée par l'attache 6a sur cette figure 1). A titre indicatif, il est noté que l'ensemble 1 est destiné à être entouré d'une nacelle (non représentée), et que le mât d'accrochage 4 comporte une autre série d'attaches (non représentées) permettant d'assurer la suspension de cet ensemble 1 sous la voilure de l'aéronef.

Dans toute la description qui va suivre, par convention, on appelle X la direction longitudinale du mât 4 qui est également assimilable à la direction longitudinale du turboréacteur 2, cette direction X étant parallèle à un axe longitudinal 5 de ce turboréacteur 2. D'autre part, on appelle Y la direction orientée transversalement par rapport au mât 4 et également assimilable à la direction transversale du turboréacteur 2, et Z la direction verticale ou de la hauteur, ces trois directions X, Y et Z étant orthogonales entre-elles.

D'autre part, les termes « avant » et « arrière » sont à considérer par rapport à une direction d'avancement de l'aéronef rencontrée suite à la poussée exercée par le turboréacteur 2, cette direction étant représentée schématiquement par la flèche 7.

Sur la figure 1, on peut voir que seules les attaches moteur 6a, 6b, 8 et la structure rigide 10 du mât d'accrochage 4 ont été représentées. Les autres éléments constitutifs non représentés de ce mât 4, tels que les moyens d'accrochage de la structure rigide 10 sous la voilure de l'aéronef, ou encore la structure secondaire assurant la ségrégation et le maintien des systèmes tout en supportant des carénages aérodynamiques, sont des éléments classiques identiques ou similaires à ceux rencontrés dans l'art antérieur, et connus de l'homme du métier. Par conséquent, il n'en sera fait aucune description détaillée.

D'autre part, il est indiqué que le turboréacteur 2 dispose à l'avant d'un carter de soufflante 12 de grande dimension délimitant un canal annulaire de soufflante 14, et comporte vers l'arrière un carter central 16 de plus petite dimension, renfermant le coeur de ce turboréacteur. Les carters 12 et 16 sont bien entendu solidaires l'un de l'autre.

Comme on peut l'apercevoir sur la figure 1, les attaches moteur 6a, 6b, 8 du mât 4, de préférence prévues au nombre de trois, sont toutes fixées sur le carter de soufflante 12 susmentionné.

En effet, en référence à présent à la figure 2 montrant plus spécifiquement et schématiquement ces mêmes attaches moteur 6a, 6b, 8, on peut voir que la première attache 6a et la seconde attache 6b sont disposées de façon symétrique par rapport à un premier plan (non représenté) défini par l'axe longitudinal 5 et la direction Z.

Plus précisément, les attaches 6a, 6b sont toutes les deux fixées sur une partie annulaire périphérique 18 du carter de soufflante 12, et de préférence sur l'arrière de cette partie 18, comme cela est représenté schématiquement.

On peut alors prévoir que les première et seconde attaches moteur 6a, 6b sont diamétralement opposées sur la partie annulaire périphérique 18 présentant une surface externe cylindrique 38 du carter de soufflante 12, de sorte que ces attaches 6a, 6b sont donc chacune traversées par un second plan défini par l'axe longitudinal 5 et la direction Y du mât 4.

Comme cela est montré schématiquement par les flèches de la figure 2, chacune des première et seconde attaches moteur 6a, 6b est conçue de manière à pouvoir reprendre des efforts générés par le turboréacteur 2 selon la direction X et selon la direction Z, mais pas ceux s'exerçant selon la direction Y.

De cette manière, les deux attaches 6a, 6b fortement éloignées l'une de l'autre assurent conjointement la reprise du moment s'exerçant selon la direction X, et celle du moment s'exerçant selon la direction Z.

Toujours en référence à la figure 2, on peut voir que la troisième attache moteur 8 représentée schématiquement est aussi fixée sur la partie annulaire périphérique 18 du carter de soufflante 12, également de préférence sur l'arrière de cette partie 18.

A titre indicatif, il est précisé que les attaches 6a, 6b, 8 sont fixées sur la partie annulaire périphérique 18 du carter 12 par l'intermédiaire de parties structurales (non représentées) du moteur, qui sont effectivement de préférence agencées sur l'arrière de la partie annulaire périphérique 18. Néanmoins, il est également possible de rencontrer des moteurs dont les parties structurales sont situées plus vers l'avant sur la partie annulaire périphérique 18, impliquant que les attaches 6a, 6b, 8 sont elles aussi fixées plus vers l'avant du moteur, toujours sur la partie annulaire périphérique 18 du carter de soufflante 12.

En ce qui concerne la troisième attache 8, celle-ci se situe sur la partie la plus haute du carter de soufflante 12, donc sur la partie la plus haute de la partie annulaire périphérique 18, et est par conséquent traversée fictivement par le premier plan indiqué ci-dessus.

Comme cela est montré schématiquement par les flèches de la figure 2, la troisième attache moteur 8 est conçue de manière à pouvoir reprendre des efforts générés par le turboréacteur 2 selon la direction X et selon la direction Y, mais pas ceux s'exerçant selon la direction Z.

De cette manière, cette troisième attache 8 assure conjointement avec les deux attaches 6a, 6b la reprise du moment s'exerçant selon la direction Y.

Il est noté que si les attaches moteur 6a, 6b, 8 du mât 4 ont été représentées de façon schématique sur les figures 1 et 2, il est à comprendre que ces attaches peuvent être réalisées selon toute forme connue de l'homme du métier, telle que par exemple celle relative à l'assemblage de manilles et de ferrures.

Comme cela a été évoqué précédemment, l'avantage principal associé à la configuration qui vient d'être décrite réside dans le fait que la totale liberté du carter central 16 vis-à-vis des attaches moteur 6a, 6b, 8 entraîne une diminution considérable de la flexion de ce carter durant les diverses situations de vol de l'aéronef, et provoque donc une baisse significative de l'usure par frottement des pales de compresseur et de turbine contre ce carter central 16.

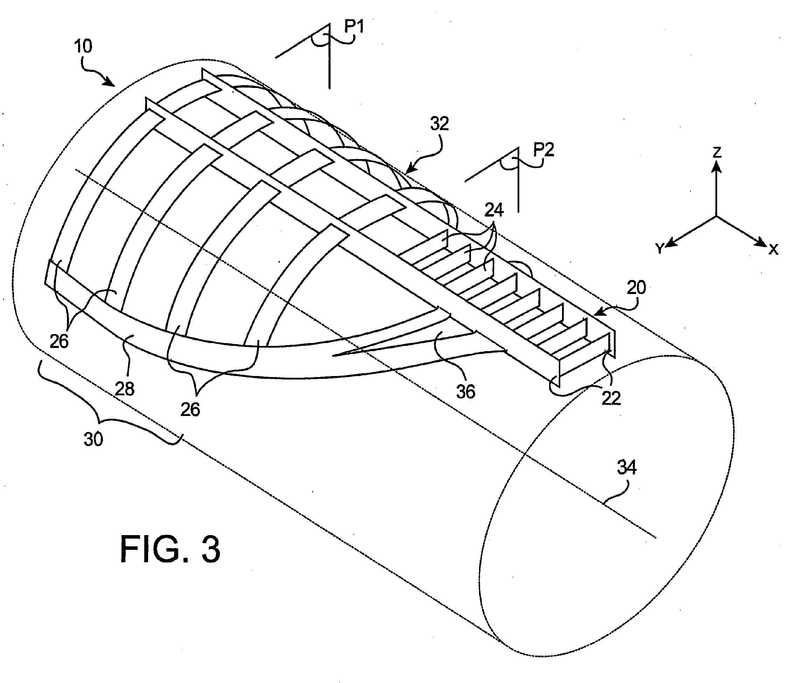

En référence à présent à la figure 3, on voit de façon détaillée la structure rigide 10 du mât d'accrochage 4 objet de la présente invention, les attaches moteur 6a, 6b, 8 ayant volontairement été omises sur cette figure.

Tout d'abord, il est indiqué que cette structure rigide 10 est conçue de manière à présenter une symétrie par rapport au premier plan indiqué ci-dessus, c'est-à-dire par rapport au plan vertical défini par l'axe longitudinal 5 du turboréacteur 2, et la direction Z.

Cette structure rigide 10 comporte un caisson central de torsion 20, qui s'étend d'un bout à l'autre de la structure 10 dans la direction X, parallèlement à cette même direction. A titre indicatif, ce caisson 20 peut être formé par l'assemblage de deux longerons latéraux 22 s'étendant selon la direction X dans des plans XZ parallèles, et raccordés entre eux par l'intermédiaire de nervures transversales 24 qui sont quant à elles orientées dans des plans YZ parallèles.

Une pluralité d'arceaux 30 est prévue pour venir compléter la structure rigide 10 dont le caisson central 20 se situe au niveau d'une portion supérieure de cette même structure 10, chacun des arceaux étant solidaire du caisson central de torsion 20 et faisant saillie de part et d'autre de celui-ci selon la direction Y.

La particularité de cette pluralité d'arceaux 30 est qu'elle délimite une partie d'une surface fictive 32 sensiblement cylindrique de section circulaire, et d'axe longitudinal 34 parallèle au caisson central 20, comme cela est représenté sur la figure 3. En d'autres termes, les arceaux 26, 28 constituant la pluralité d'arceaux 30 disposent chacun d'une courbure adaptée pour pouvoir se positionner autour et au contact de cette surface fictive 32, sur toute leur longueur. Ainsi, d'une manière générale, la pluralité d'arceaux 30 forme une portion d'une enveloppe/cage sensiblement cylindrique de section circulaire, susceptible d'être positionnée autour et à distance du carter central 16 du turboréacteur 2.

Parmi la pluralité d'arceaux 30, on note tout d'abord la présence de plusieurs arceaux en forme de portion annulaire 26 qui sont sensiblement centrés sur l'axe longitudinal 34 de la surface fictive 32, ce dernier étant de préférence confondu avec l'axe longitudinal 5 du turbopropulseur 2. Par conséquent, on peut en fait se rendre compte que la structure rigide 10 présente également une symétrie par rapport au plan vertical défini par l'axe longitudinal 34 et la direction Z du mât 4.

Les arceaux 26 sont donc espacés les uns des autres selon la direction X, et agencés dans des plans YZ parallèles. De plus, ils sont solidarisés au caisson central 20 qui traverse chacun d'entre eux en son milieu. Plus précisément, chaque arceau en forme de portion annulaire 26 traverse les deux longerons latéraux 22, et est fixé rigidement sur ces deux derniers, par exemple par soudage ou par assemblage mécanique.

A titre indicatif, ces arceaux 26 peuvent chacun être réalisés d'un seul tenant, ou bien par exemple à l'aide de deux parties identiques rapportées rigidement l'une sur l'autre.

Dans le mode de réalisation représenté sur la figure 3, les arceaux 26 sont au nombre de quatre, et disposent d'une longueur qui diminue au fur et à mesure qu'ils se rapprochent de l'arrière de la structure 10. En effet, il est noté que l'arceau 26 situé le plus à l'avant de la structure 10 et solidaire d'une extrémité avant du caisson central 20, présente la forme d'un demi-anneau dont les deux extrémités sont par conséquent agencées sensiblement au niveau du plan XY passant par l'axe longitudinal 34, ce plan étant identique au second plan susmentionné, toujours en raison de l'identité entre les axes 5 et 34. Le second arceau 26 présente quant à lui une longueur légèrement inférieure à celle d'un demi-anneau, et ainsi de suite jusqu'au dernier arceau 26 situé par exemple au niveau d'une portion centrale du caisson 20, considérée selon la direction X.

Il est noté que la partie avant du caisson central 20 traversée par les arceaux en forme de portion annulaire 26 ne nécessite pas forcement d'intégrer des nervures transversales 24, puisque les deux longerons latéraux 22 sont raccordés entre eux par la partie supérieure de ces arceaux 26.

La pluralité d'arceaux 30 comporte également deux arceaux latéraux de reprise des efforts de poussée 28 (un seul étant visible sur la figure 3, en raison de la représentation en perspective). Ces arceaux 28 sont effectivement agencés de manière à pouvoir reprendre les efforts de poussée générés par le turboréacteur 2 durant les différentes phases de vol de l'aéronef, dans le but évident de limiter la flexion longitudinale de ce turboréacteur 2, et plus précisément celle de son carter de soufflante 12.

Un arceau 28 est disposé de chaque côté du caisson central 20, et présente une partie avant raccordée rigidement aux arceaux 26, ainsi qu'une partie arrière raccordée rigidement sur le caisson central 20. De manière plus précise, chacun des deux arceaux 28 présente une extrémité avant solidaire de l'une des deux extrémités de l'arceau 26 le plus avant, et s'étend vers l'arrière et vers le haut en étant raccordé rigidement à l'une des deux extrémités de chacun des autres arceaux 26. Ensuite, son extrémité arrière vient s'assembler sur le longeron latéral 22 situé du même côté que l'arceau 28 concerné, au niveau d'une partie arrière du caisson 20. Il est à observer qu'un renfort 36 pourrait éventuellement être adjoint pour renforcer la liaison mécanique établie entre l'extrémité arrière de l'arceau 28 et le longeron latéral 22 associé, cette liaison étant par exemple obtenue par soudage ou par assemblage mécanique.

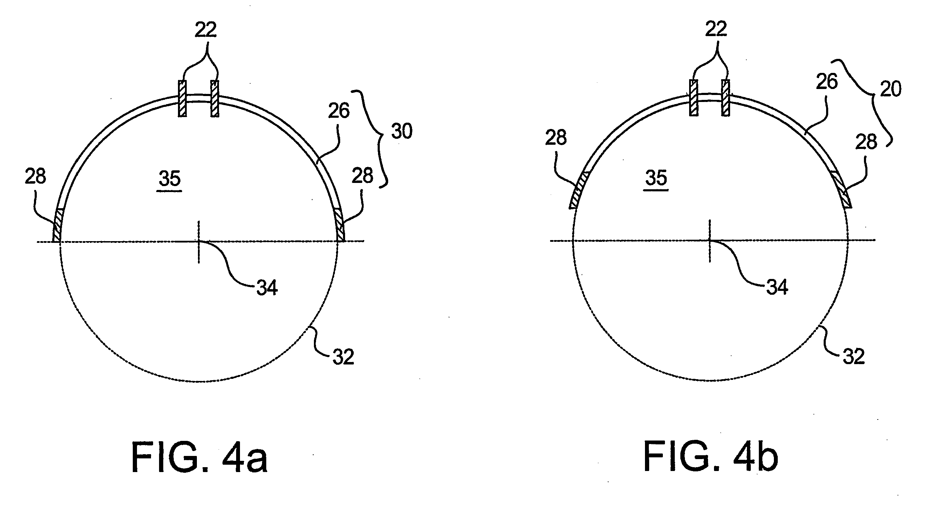

La figure 4a représente une vue en coupe prise selon un plan P1 transversal situé entre les deux arceaux 26 les plus avant, et la figure 4b représente une vue en coupe prise selon un plan P2 également transversal situé à l'arrière de l'arceau 26 le plus arrière, mais à l'avant de la jonction entre l'arceau 28 et le caisson central 20.

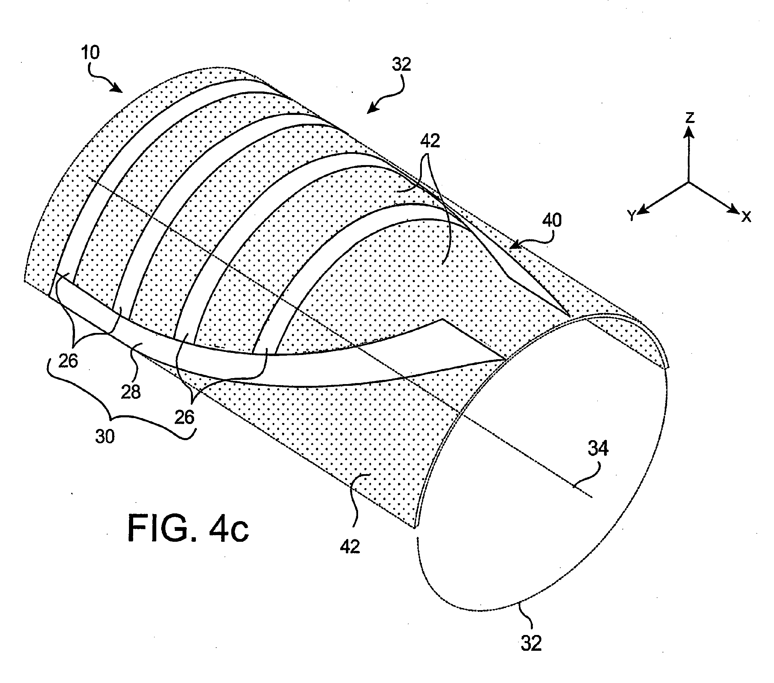

Sur ces figures, on peut effectivement voir que la pluralité d'arceaux 30 délimite une partie de la surface fictive 32 sensiblement cylindrique de section circulaire, et que cette pluralité d'arceaux 30 constitue bien une portion d'une enveloppe/cage sensiblement cylindrique de section semi-circulaire centrée sur l'axe longitudinal 34, comme cela sera également décrit en référence à la figure 4c.

Il est noté que pour créer le moins de perturbation possible du flux secondaire s'échappant du canal annulaire de soufflante 14, le diamètre de la surface fictive cylindrique 32 est de préférence sensiblement identique au diamètre de la surface externe cylindrique 38 de la partie annulaire 18 du carter de soufflante 12. D'autre part, comme on peut le voir sur les figures 4a et 4b, les longerons latéraux 22 ne font saillie que sur une très petite distance à l'intérieur de l'espace 35 délimité par la surface fictive 32, de sorte qu'ils ne perturbent pas non plus significativement l'écoulement du flux d'air secondaire. Cela s'explique notamment par le fait que les longerons 22 disposent d'une hauteur selon la direction Z qui est extrêmement petite par rapport au diamètre des surfaces fictive 32 et externe 38. De plus, ce n'est qu'une partie inférieure de ces longerons 22 qui pénètre à l'intérieur de l'espace 35, l'autre partie se situant au-dessus de la pluralité d'arceaux 30.

Pour illustrer de façon schématique la forme préférée de la pluralité d'arceaux 30, la figure 4c montre que celle-ci constitue une partie seulement d'une enveloppe/cage 40 sensiblement cylindrique de section semi-circulaire, centrée sur l'axe longitudinal 34 et entourant la moitié supérieure de la surface fictive 32. Ainsi, sur cette figure 4c, les parties 42 représentées de façon hachurée correspondent aux parties manquant à la pluralité d'arceaux 30 pour former le demi-cylindre complet 40. En outre, cette représentation permet également de comprendre le fait que la pluralité d'arceaux 30 forme sensiblement un prolongement vers l'arrière de la partie annulaire périphérique 18 du carter de soufflante 12.

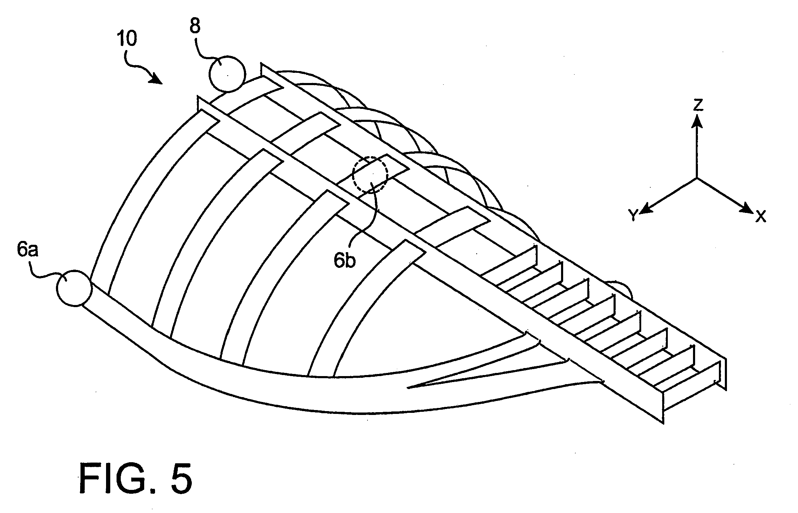

En référence à la figure 5, on voit que la structure rigide 10 du mât d'accrochage 4 est tout à fait adaptée pour supporter les attaches moteur 6a, 6b, 8, puisque celles-ci peuvent être facilement fixées sur l'arceau 26 le plus avant. En effet, les première et seconde attaches 6a, 6b sont respectivement fixées aux deux extrémités de cet arceau 26 le plus avant en forme de demi-anneau, tandis que la troisième attache 8 est solidaire de la partie supérieure de ce même arceau 26, située entre les deux longerons latéraux 22 du caisson central 20. De plus, dans le cas retenu où le caisson central 20 dispose d'un longeron horizontal supérieur et d'un longeron horizontal inférieur (non représentés pour des raisons de clarté) fermant ce caisson 20 respectivement vers le haut et vers le bas, la troisième attache 8 est alors également située entre ces deux longerons horizontaux du caisson central 20.

De cette manière, il est donc à comprendre que les deux attaches moteur 6a, 6b sont disposées de façon symétrique par rapport au plan défini par l'axe longitudinal 34 et la direction Z du mât 4, de même que la troisième attache moteur 8 est traversée par ce même plan identique au premier plan mentionné précédemment.

A titre d'exemple indicatif, la totalité des éléments constitutifs de la structure rigide 10 qui vient d'être décrite est réalisée à l'aide de matériaux métalliques, tels que l'acier, l'aluminium, le titane, ou encore à l'aide de matériaux composites, de préférence en carbone. De plus, les arceaux de la pluralité d'arceaux 30 peuvent chacun prendre la forme d'une bande de tôle à courbure.

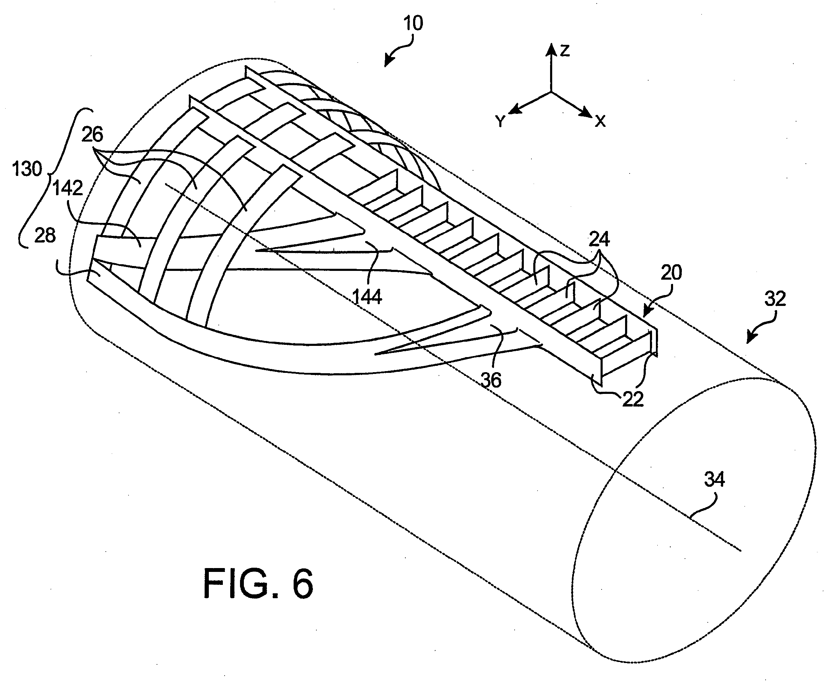

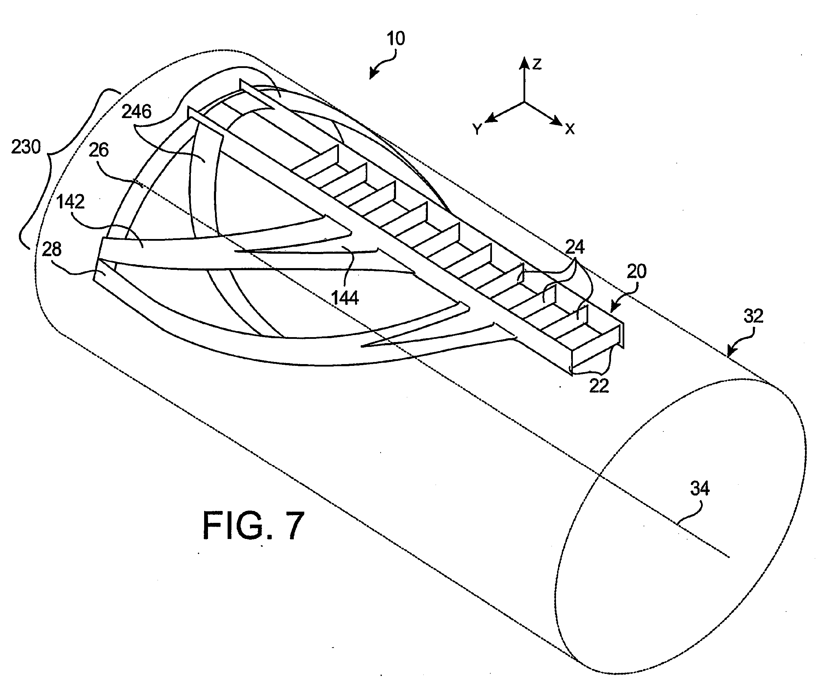

Les figures 6 et 7 représentent respectivement des première et seconde alternatives de réalisation de la structure rigide 10 décrite ci-dessus en référence à la figure 3. Ainsi, sur l'ensemble des figures, les éléments portant les mêmes références numériques correspondent à des éléments identiques ou similaires.

Tout d'abord en référence à la figure 6 représentant la première alternative, il est noté que si la pluralité d'arceaux 130 a été modifiée par rapport à la pluralité d'arceaux 30 décrite précédemment, celle-ci est toujours réalisée de manière à délimiter une partie de la surface fictive 32 sensiblement cylindrique de section circulaire, et à constituer de préférence une partie d'une enveloppe/cage sensiblement cylindrique de section semi-circulaire, centrée sur l'axe longitudinal 34.

Les modifications apportées par rapport à la pluralité d'arceaux 30 sont au nombre de deux, puisque l'arceau en forme de portion annulaire 26 situé le plus à l'arrière de la structure rigide 10 a été supprimé, et qu'il a en revanche été rajouté deux arceaux latéraux secondaires de reprise des efforts de poussée 142, qui ont pour but de remplir un rôle similaire à celui des arceaux 28.

Un arceau 142 est disposé de chaque côté du caisson central 20, et présente une extrémité avant raccordée rigidement à l'une des deux extrémités de l'arceau 26 le plus avant, la liaison mécanique réalisée se situant par exemple juste au-dessus de la fixation entre ce même arceau avant 26 et l'arceau 28. Par ailleurs, l'arceau latéral secondaire de reprise des efforts de poussée 142 s'étend vers l'arrière et vers le haut jusqu'à ce que son extrémité arrière vienne s'assembler sur le longeron latéral 22 situé du même côté que cet arceau 142, au niveau d'une partie centrale du caisson 20. Ici encore, un renfort 144 pourrait éventuellement être adjoint pour renforcer la liaison mécanique établie entre l'extrémité arrière de l'arceau 142 et le longeron latéral 22 associé, cette liaison étant par exemple obtenue par soudage ou par assemblage mécanique.

De plus, il est noté que l'arceau latéral secondaire de reprise des efforts de poussée 142 peut croiser les deux autres arceaux en forme de portion annulaire 26 sans nécessairement être solidarisé à ces derniers.

En référence à la figure 7 représentant la seconde alternative, il est noté que la pluralité d'arceaux 230 a été modifiée par rapport à la pluralité d'arceaux 130 qui vient d'être décrite, mais que celle-ci est toujours réalisée de manière à délimiter une partie de la surface fictive 32 sensiblement cylindrique de section circulaire, et à constituer de préférence une partie d'une enveloppe/cage sensiblement cylindrique de section semi-circulaire, centrée sur l'axe longitudinal 34.

Les modifications apportées par rapport à la pluralité d'arceaux 130 sont également au nombre de deux, puisque seul l'arceau avant en forme de portion annulaire 26 a été conservé, et qu'il a de plus été rajouté deux arceaux de maintien 246 des arceaux de reprise des efforts de poussée 28.

Un arceau de maintien 246 est disposé de chaque côté du caisson central 20, et présente une extrémité avant raccordée rigidement à une partie avant du caisson 20. En outre, l'arceau de maintien 246 s'étend vers l'arrière et vers le bas jusqu'à ce que son extrémité arrière vienne s'assembler sur l'arceau de reprise des efforts de poussée 28 situé du même côté que cet arceau 246, au niveau d'une partie sensiblement centrale de cet arceau 28.

Avec un tel agencement, les arceaux de maintien 246 travaillant en traction permettent aux arceaux de reprise des efforts de poussée 28 de ne pas fléchir durant les différentes phases de vol de l'aéronef, et évitent donc qu'un écartement significatif se produise entre les deux arceaux 28 et 142 d'un même côté de la structure rigide 10.

Il est à observer que de chaque côté de la structure rigide 10, en vue de côté, les arceaux 142 et 246 forment sensiblement un X. De plus, l'arceau de maintien 246 peut croiser l'arceau latéral secondaire de reprise des efforts de poussée 142 sans nécessairement être solidarisé à celui-ci.

Comme cela est visible sur la figure 7, il est possible de prévoir que les deux extrémités avant des deux arceaux 246 soient solidarisées entre elles, par exemple par soudage ou par assemblage mécanique, entre les deux longerons latéraux 22 auxquels elles sont également respectivement raccordées. Naturellement, il aurait aussi pu être envisagé de remplacer les deux arceaux 246 par un unique arceau de maintien réalisé d'un seul tenant et s'étendant de part et d'autre du caisson central 20, sans sortir du cadre de l'invention.

Enfin, comme on peut clairement l'apercevoir sur les figures 3, 6 et 7, le caisson central 20 des première et seconde alternatives de réalisation du mât 4 peut également subir quelques modifications mineures, par exemple en ce qui concerne la disposition et le nombre des nervures transversales 24.

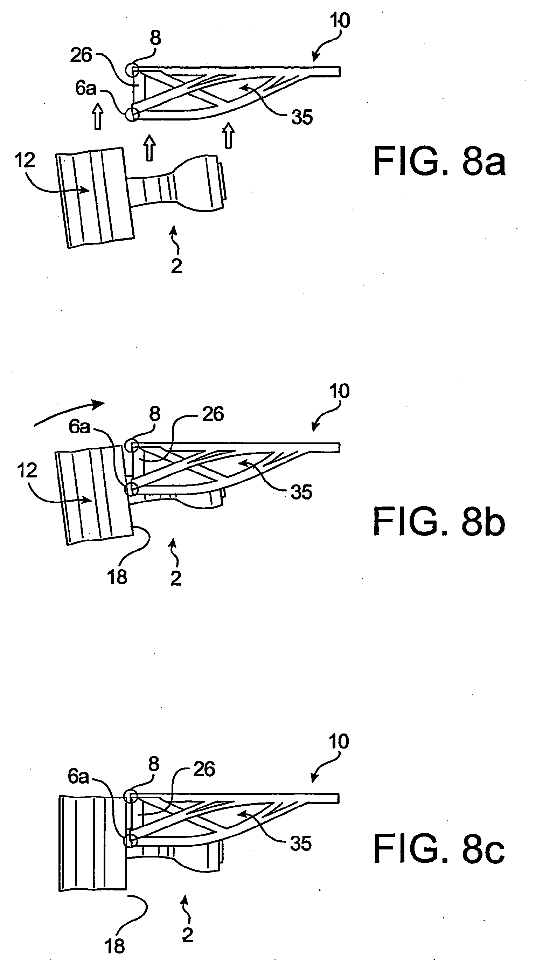

Les figures 8a à 8c représentent des vues illustrant différentes étapes successives de l'opération d'assemblage du turboréacteur 2 sur la structure rigide 10 qui vient d'être décrite, c'est-à-dire celle se présentant sous la forme de la seconde alternative.

Dans un premier temps, comme l'illustrent les flèches de la figure 8a, le turboréacteur 2 se situant dans une position où son avant est légèrement incliné vers le bas subit un déplacement vers le haut, par exemple à l'aide d'un chariot élévateur classique (non représenté), en direction de la structure rigide 10 maintenue fixement.

Lorsque le turboréacteur 2 a été suffisamment surélevé pour pénétrer à l'intérieur de l'espace 35 défini par la surface fictive 32 (non représentée sur cette figure), il est procédé à la mise en place des attaches 6a, 6b, respectivement entre les extrémités de l'arceau avant 26 et la partie annulaire périphérique 18 du carter de soufflante 12.

Ensuite, le turboréacteur 2 est pivoté autour des première et seconde attaches 6a, 6b de sorte que son carter de soufflante 12 puisse remonter, comme cela est représenté schématiquement par la flèche de la figure 8b. La figure 8c montre quant à elle que le pivotement du turboréacteur 2 est stoppé dès lors que la partie annulaire périphérique 18 est suffisamment proche de l'arceau avant 26 pour qu'il puisse être procédé à la mise en place de la troisième attache moteur 8.

Bien entendu, diverses modifications peuvent être apportées par l'homme du métier au mât d'accrochage 4 de turboréacteur 2 pour aéronef qui vient d'être décrit, uniquement à titre d'exemple non limitatif. A cet égard, on peut notamment indiquer qui si le mât 4 a été présenté dans une configuration adaptée pour qu'il soit suspendu sous la voilure de l'aéronef, ce mât 4 pourrait également se présenter dans une configuration différente lui permettant d'être monté au-dessus de cette même voilure.

## Revendications

1. Mât d'accrochage (4) de turboréacteur (2) pour aéronef, le mât disposant d'une structure rigide (10), ladite structure rigide (10) comprenant une pluralité d'arceaux (30, 130, 230) agencés de façon à délimiter conjointement une partie d'une surface fictive (32) sensiblement cylindrique de section circulaire,
ladite pluralité d'arceaux (30, 130, 230) comportant au moins un arceau en forme de portion annulaire (26) sensiblement centré sur un axe longitudinal (34) de ladite surface fictive (32),
ladite structure rigide (10) du mât d'accrochage (4) comportant un caisson central (20) s'étendant parallèlement à l'axe longitudinal (34) de ladite surface fictive (32) et étant solidaire de chaque arceau en forme de portion annulaire (26),
**caractérisé en ce que** ladite pluralité d'arceaux (30, 130, 230) comporte en outre deux arceaux latéraux de reprise des efforts de poussée (28) disposés respectivement de part et d'autre du caisson central (20), chacun desdits deux arceaux latéraux (28) étant solidarisé d'une part à chaque arceau en forme de portion annulaire (26), et d'autre part audit caisson central (20).

2. Mât d'accrochage (4) pour aéronef selon la revendication 1, **caractérisé en ce que** ladite pluralité d'arceaux (130, 230) comporte en outre deux arceaux latéraux secondaires de reprise des efforts de poussée (142) disposés respectivement de part et d'autre du caisson central (20), chacun desdits deux arceaux latéraux secondaires (142) étant solidarisé d'une part à au moins un arceau en forme de portion annulaire (26), et d'autre part audit caisson central (20).

3. Mât d'accrochage (4) pour aéronef selon la revendication 1 ou la revendication 3, **caractérisé en ce que** ladite pluralité d'arceaux (230) comporte également deux arceaux de maintien (246) des arceaux latéraux de reprise des efforts de poussée (28), lesdits deux arceaux de maintien (246) étant disposés respectivement de part et d'autre du caisson central (20) et chacun solidarisé d'une part à l'un desdits deux arceaux latéraux (26), et d'autre part audit caisson central (20).

4. Mât d'accrochage (4) pour aéronef selon l'une quelconque des revendications 1 à 3, **caractérisé en ce que** chacun des deux arceaux latéraux de reprise des efforts de poussée (28) est solidarisé à une extrémité de chaque arceau en forme de portion annulaire (26).

5. Mât d'accrochage (4) pour aéronef selon l'une quelconque des revendications 1 à 4, **caractérisé en ce qu'**au moins un arceau en forme de portion annulaire (26) est un demi-anneau.

6. Mât d'accrochage (4) pour aéronef selon l'une quelconque des revendications précédentes,
**caractérisé en ce que** ladite pluralité d'arceaux (30, 130, 230) prend la forme d'une portion d'une enveloppe (40) sensiblement cylindrique de section semi-circulaire.

7. Mât d'accrochage (4) pour aéronef selon l'une quelconque des revendications précédentes, **caractérisé en ce qu'**il comprend une pluralité d'attaches moteur (6a, 6b, 8), chacune d'entre elles étant fixée à ladite pluralité d'arceaux (30, 130, 230).

8. Mât d'accrochage (4) pour aéronef selon la revendication 7, **caractérisé en ce que** ladite pluralité d'attaches moteur (6a, 6b, 8) est constituée d'une première attache moteur (6a) et d'une seconde attache moteur (6b) situées de façon symétrique par rapport à un plan défini par l'axe longitudinal (34) de la surface fictive (32) et une direction verticale (Z) de ce mât, ainsi que d'une troisième attache moteur (8) traversée par ce même plan.

9. Mât d'accrochage (4) pour aéronef selon la revendication 8, **caractérisé en ce que** les première, seconde et troisième attaches moteur (6a, 6b, 8) sont fixées sur un même arceau en forme de portion annulaire (26) appartenant à ladite pluralité d'arceaux (30, 130, 230).

10. Mât d'accrochage (4) pour aéronef selon la revendication 8 ou la revendication 9, **caractérisé en ce que** les première et seconde attaches moteur (6a, 6b) sont traversées par un plan défini par l'axe longitudinal (34) de la surface fictive (32) et une direction transversale (Y) de ce mât.

11. Mât d'accrochage (4) pour aéronef selon l'une quelconque des revendications 8 à 10, **caractérisé en ce que** les première et seconde attaches moteur (6a, 6b) sont chacune conçues de manière à reprendre des efforts s'exerçant selon une direction longitudinale (X) du mât (4) et selon la direction verticale (Z) de ce mât.

12. Mât d'accrochage (4) pour aéronef selon l'une quelconque des revendications 8 à 11, **caractérisé en ce que** la troisième attache moteur (8) est conçue de manière à reprendre des efforts s'exerçant selon une direction longitudinale (X) du mât (4) et selon une direction transversale (Y) de ce mât.

13. Aéronef **caractérisé en ce qu'**il comprend au moins un mât d'accrochage (4) selon l'une quelconque des revendications précédentes.

## Claims

1. Mounting pylon (4) for an aircraft turbojet (2), with a rigid structure (10), said rigid structure (10) comprising a plurality of arcs (30, 130, 230) arranged so as to jointly delimit a part (32) of a fictitious approximately cylindrical surface with a circular section,
said plurality of arcs (30, 130, 230) comprising at least one arc with an annular-shaped portion (26) approximately centered on a longitudinal axis (34) of said fictitious surface (32),
said rigid structure (10) of the mounting pylon (4) comprising a central box (20) that extends parallel to the longitudinal axis (34) of said fictitious surface (32) and is fixed to each arc in the form of an annular portion (26),
**characterized in that** said plurality of arcs (30, 130, 230) also comprises two side thrust resisting arcs (28) located on each side of the central box (20), each of said two lateral arcs (28) being fixed firstly to each arc in the form of an annular portion (26), and on each side of the central box (20).

2. Mounting pylon (4) for an aircraft set forth in claim 1, **characterized in that** said plurality of arcs (130, 230) also comprises two side thrust resisting arcs (142) located on each side of the central box (20), each of said two secondary lateral arcs (142) being fixed firstly to at least an arc in the form of an annular portion (26), and secondly to said central box (20).

3. Mounting pylon (4) for an aircraft set forth in claim 1 or claim 2, **characterized in that** said plurality of arcs (230) also includes two lateral thrust resisting support arcs (28), said two support arcs (246) being arranged on each side of the central box (20) and each being fixed firstly to one of said two lateral arcs (26), and secondly to said central box (20).

4. Mounting pylon (4) for an aircraft set forth in any one of claims 1 to 3, **characterized in that** each of the two lateral thrust resisting arcs (28) is fixed to one end of each arc in the form of an annular portion (26).

5. Mounting pylon (4) for an aircraft set forth in any one of claims 1 to 4, **characterized in that** at least one arc in the form of an annular portion (26) is a half ring.

6. Mounting pylon (4) for an aircraft set forth in any one of the above claims, **characterized in that** said plurality of arcs (30, 130, 230) forms a part of an approximately cylindrical envelope (40) with a semi-circular section.

7. Mounting pylon (4) for an aircraft set forth in any one of the above claims, **characterized in that** it comprises a plurality of engine fasteners (6a, 6b, 8), each of which is fixed to said plurality of arcs (30, 130, 230).

8. Mounting pylon (4) for an aircraft set forth in claim 7, **characterized in that** said plurality of engine fasteners (6a, 6b, 8) consists of a first engine fastener (6a) and a second engine fastener (6b) located symmetrically about a plane defined by the longitudinal axis (34) of the fictitious surface (32) and a vertical direction (Z) of the pylon, and a third engine fastener (8) through which this same plane passes.

9. Mounting pylon (4) for an aircraft set forth in claim 8, **characterized in that** the first, second and third engine fasteners (6a, 6b, 8) are fixed on said arc in the form of an annular portion (26) belonging to said plurality of arcs (30, 130, 230).

10. Mounting pylon (4) for an aircraft set forth in either claim 8 or 9, **characterized in that** a plane defined by the longitudinal axis (34) of the fictitious surface (32) and a transverse direction (Y) of this pylon pass through the first and second engine fasteners (6a, 6b).

11. Mounting pylon (4) for an aircraft set forth in any one of claims 8 to 10, **characterized in that** the first and second engine fasteners (6a, 6b) are each designed so as to resist forces applied along a longitudinal direction (X) of the pylon (4) and along the vertical direction (Z) of the pylon.

12. Mounting pylon (4) for an aircraft set forth in any one of claims 8 to 11, **characterized in that** the third engine fastener (8) is designed so as to resist forces applied along the longitudinal direction (X) of the pylon (4) and along a transverse direction (Y) of this pylon.

13. Aircraft **characterized in that** it comprises at least one mounting pylon (4) according to any one of the above claims.

## Patentansprüche

1. Aufhängungsmast (4) eines Strahltriebwerks (2) für ein Luftfahrzeug, wobei der Mast über eine starre Struktur (10) verfügt und die starre Struktur (10) mehrere Bogenstücke (30,130,230) aufweist, die so angeordnet sind, dass sie gemeinsam einen Abschnitt einer fiktiven Oberfläche (32) begrenzen, die im wesentlichen zylindrisch mit kreisförmigem Querschnitt ist,
wobei die mehreren Bogenstücke (30,130,230) mindestens ein Bogenstück in Form eines Ringabschnitts (26) aufweisen, der im wesentlichen auf eine Longitudinalachse (34) der fiktiven Oberfläche (32) zentriert ist,
wobei die starre Struktur (10) des Aufhängungsmasts (4) einen zentralen Kasten (20) aufweist, der sich parallel zu der Longitudinalachse (34) der fiktiven Oberfläche (32) erstreckt und mit jedem Bogenstück in Form eines Ringabschnitts (22) fest verbunden bzw. einstückig ist,
**dadurch gekennzeichnet, dass** die mehreren Bogenstücke (30,130,230) außerdem zwei laterale Bogenstücke zur Aufnahme von Schubkräften (28) umfasst, die jeweils auf beiden Seiten des zentralen Kastens (20) angeordnet sind, wobei jedes der zwei lateralen Bogenstücke (28) einerseits mit jedem Bogenstück in Form eines Ringabschnitts (26) und andererseits mit dem zentralen Kasten (20) fest verbunden bzw. einstückig ist.

2. Aufhängungsmast (4) für ein Luftfahrzeug nach Anspruch 1, **dadurch gekennzeichnet, dass** die mehreren Bogenstücke (130,230) außerdem zwei sekundäre laterale Bogenstücke zur Aufnahme von Schubkräften (142) umfasst, die jeweils auf beiden Seiten des zentralen Kastens (20) angeordnet sind,
wobei die beiden sekundären lateralen Bogenstücke (142) einerseits mit mindestens einem Bogenstück in Form eines Ringabschnitts (26) und andererseits mit dem zentralen Kasten (20) einstückig bzw. fest verbunden sind.

3. Aufhängungsmast (4) für ein Luftfahrzeug nach Anspruch 1 oder Anspruch 3, **dadurch gekennzeichnet, dass** die mehreren Bogenstücke (230) auch zwei Bogenstücke (246) zum Halten der lateralen Bogenstücke zur Aufnahme von Schubkräften (28) umfassen, wobei die beiden Bogenstücke (246) zum Halten jeweils auf beiden Seiten des zentralen Kastens (20) angeordnet sind und jeweils einerseits mit den beiden lateralen Bogenstücken (26) und andererseits mit dem zentralen Kasten (20) einstückig bzw. fest verbunden sind.

4. Aufhängungsmast (4) für ein Luftfahrzeug nach einem der Ansprüche 1 bis 3, **dadurch gekennzeichnet, dass** jedes der beiden lateralen Bogenstücke zur Aufnahme von Schubkräften (28) mit einem Ende jedes Bogens in Form eines Ringabschnitts (26) einstückig bzw. fest verbunden ist.

5. Aufhängungsmast (4) für ein Luftfahrzeug nach einem der Ansprüche 1 bis 4, **dadurch gekennzeichnet, dass** mindestens ein Bogenstück in Form eines Ringabschnitts (26) ein Halbring ist.

6. Aufhängungsmast (4) für ein Luftfahrzeug nach einem der vorangehenden Ansprüche, **dadurch gekennzeichnet, dass** die mehreren Bogenstücke (30,130,230) die Form eines Abschnitts einer im wesentlichen zylindrischen Umhüllung (40) von halbkreisförmigem Querschnitt aufweisen.

7. Aufhängungsmast (4) für ein Luftfahrzeug nach einem der vorangehenden Ansprüche, **dadurch gekennzeichnet, dass** er mehrere Triebwerk-Befestigungselemente (6a,6b,8) aufweist, wobei jedes hiervon an den mehreren Bogenstücken (30,130,230) befestigt ist.

8. Aufhängungsmast (4) für ein Luftfahrzeug nach Anspruch 7, **dadurch gekennzeichnet, dass** die mehreren Triebwerk-Befestigungselemente (6a,6b,8) aus einem ersten Triebwerk-Befestigungselement (6a) und einem zweiten Triebwerk-Befestigungselement (6b) gebildet sind, die symmetrisch in bezug auf eine Ebene angeordnet sind, welche durch die Longitudinalachse (34) der fiktiven Oberfläche (32) und eine Vertikalrichtung (Z) dieses Masts festgelegt ist, sowie aus einem dritten Triebwerk-Befestigungselement (8), das von dieser Ebene durchsetzt wird.

9. Aufhängungsmast (4) für ein Luftfahrzeug nach Anspruch 8, **dadurch gekennzeichnet, dass** die ersten, zweiten und dritten Triebwerk-Befestigungselemente (6a,6b,8) auf ein und demselben Bogenstück in Form eines Ringabschnitts (26) befestigt sind, welcher zu den mehreren Bogenstücken (30,130,230) gehört.

10. Aufhängungsmast (4) für ein Luftfahrzeug nach Anspruch 8 oder Anspruch 9, **dadurch gekennzeichnet, dass** die ersten und zweiten Triebwerk-Befestigungselemente (6a,6b) von einer Ebene durchsetzt sind, die durch die Longitudinalachse (34) der fiktiven Oberfläche (32) und eine Transversalrichtung (Y) dieses Masts festgelegt ist.

11. Aufhängungsmast (4) für ein Luftfahrzeug nach einem der Ansprüche 8 bis 10, **dadurch gekennzeichnet, dass** die ersten und zweiten Triebwerk-Befestigungselemente (6a,6b) jeweils so ausgelegt sind, dass sie Kräfte aufnehmen, die in einer Longitudinalrichtung (X) des Masts (4) und in einer Vertikalrichtung (Z) dieses Masts ausgeübt werden.

12. Aufhängungsmast (4) für ein Luftfahrzeug nach einem der Ansprüche 8 bis 11, **dadurch gekennzeichnet, dass** das dritte Triebwerk-Befestigungselement (8) so ausgelegt ist, dass es Kräfte aufnimmt, die in der Longitudinalrichtung (X) des Masts (4) und in der Transversalrichtung (Y) dieses Masts ausgeübt werden.

13. Luftfahrzeug, **dadurch gekennzeichnet, dass** es mindestens einen Aufhängungsmast (4) gemäß einem der vorangehenden Ansprüche aufweist.
